# EUROPEAN PATENT SPECIFICATION

(11) **EP 2 833 604 B1**
(45) Date of publication and mention of the grant of the patent: **25.05.2016**
(21) Application number: 14179324.0
(22) Date of filing: 31.07.2014
(51) Int. Cl.: H04L 29/08, H04W 4/02, H04W 12/02, G06F 21/62

(54) **System for analyzing mobile telephone users locations and classifications, while maintaining users privacy constraints**
System zur Analyse von Mobiltelefonnutzerstandorten und -klassifizierungen unter Beibehaltung der Privatsphärebeschränkungen der Nutzer
Système permettant d'analyser des emplacements et classifications des utilisateurs de téléphone mobile, tout en maintenant les contraintes de confidentialité des utilisateurs

(30) Priority: 01.08.2013 IL 22777513
(43) Date of publication of application: 04.02.2015
(73) Proprietor: Deutsche Telekom AG, 53113 Bonn (DE)
(72) Inventor: Elovici, Yuval, 7986400 Aruguot (IL); Mimran, Dudu, Tel Aviv (IL); Chizi, Barak, Ashkelon (IL); Ackerman, Pavel, Cumming, GA 30041 (US); Bixenspaner, Moshe, Ra'anana (IL)
(74) Representative: Maiwald Patentanwalts GmbH

(56) References cited:
- WO-A1-2012/019643
- WO-A2-2009/138986
- US-A1- 2006 123 461

## Description

### Field of Invention

The present invention relates in general to systems for analyzing locations and classifications of mobile telephone users. More specifically, the invention relates to a system which performs such analysis without breaching the privacy of individual users.

### Background of the Invention

It is well known that knowledge with respect to the location of mobile telephone users at specific times is valuable, at least in terms of commercial use. For example, if an owner of a specific store becomes aware that a group of users in the average age of 50-60 pass next to his store during a specific period, he will be able to offer specific type of goods during these respective periods. Similarly, if a restaurant owner becomes aware that during a specific period mostly youngsters, or alternatively people earning above the average salary pass nearby, he will be able to design the restaurant food accordingly during the respective period. There are many other advantages for such knowledge of location and classification of the telephone users (by age, average of salary, gender, etc.). Typically, mobile telephone companies are capable of obtaining relatively easily this valuable knowledge based on their communication facilities and their internal CRM databases, however, a commercial use of such knowledge may significantly breach the users' privacy. Therefore, and in order to keep the privacy of telephone users, very significant regulations are applied in most countries that strictly prohibit any use by mobile telephone companies of users' location, unless a court permission is obtained in advance, and such permissions are granted very rarely. WO 2012/019643, US 2006/0123461, and WO 2009/138986 disclose some aspects relating to the keeping of privacy in mobile-networks' databases.

It is therefore an object of the present invention to provide a system and method for correlating between telephone users' classifications and their respective locations, while not causing any breach to the users' privacy.

It is another object of the present invention to provide a system which correlates location and classification of telephone users, while meeting all the existing privacy regulations.

Other objects and advantages of the present invention will become apparent as the description proceeds.

### Summary of the Invention

The invention relates to a system for providing a database ready for querying and analyzing locations of mobile phone users, said database being secured from possibility of breaching a privacy of a single user, which comprises: (a) a signal tracker for receiving a flow of real-time network registrations of plurality of mobile phones, for comparing each registration with a corresponding previous registration for a same mobile phone, and for forwarding any present registration and the result of said comparison to an aggregator-classifier and a step aggregator respectively; (b) an aggregator-classifier and a step aggregator for receiving each of said registration and comparison results respectively, for consulting with a CRM with respect to each registration, and based on said consultation aggregating registration records and step records according to their classifications; (c) a timer for periodically, every period T, forwarding the aggregated registration records and the aggregated step records, as aggregated within said aggregator-classifier and within said step aggregator respectively to a sector gate keeper and to a step gate keeper respectively; (d) a sector gate keeper and a step gate keeper for inspecting each aggregated registration record and each aggregated step record, and for forwarding to a sector gate keeper and to a step gate keeper respectively only those aggregated registration records and aggregated step records that evolve from at least a predefined number N of different users; (e) a sector writer and a step writer for receiving aggregated registration records, and aggregated step records, each evolving from at least a predefined number N of different users, and for writing all said records within a database.

Preferably, all those aggregated step and registration records that are found by said gate keepers to evolve from less than N different users, are merged with proximate records within the aggregator-classifier and within the step aggregator respectively to form enlarged respective records that each evolve from more than N users, all those that enlarged records that are found by said gate keepers to evolve from more than N users are also forwarded as such to the sector gate keeper and to the step gate keeper respectively.

Preferably, the system further comprises an analyzer, for querying and performing statistical analysis within said database.

Preferably, said analyzer comprises: (a) a sector extractor and a step extractor for receiving and conveying a query to the database; (b) a coverage extractor for receiving a result of said query, and for limiting a coverage range of the result to a specific range; and (c) a shape extractor for forming a final result of the query.

### Brief Description of the Drawings

In the drawings:
- Fig. 1 describes a structure of a location and classification system with privacy constraints, according to an embodiment of the present invention; and
- Fig. 2 illustrates a structure of an analyzer, according to an embodiment of the invention.

### Detailed Description of Preferred Embodiments

Typically, each mobile telephone operator initiates a registration procedure of each telephone device in the network once every some maximal time period T (this period typically has to meet local regulations), unless the user of the telephone has performed an action with his telephone during this period. Such user action may be, for example, conducting of a phone call, an access to the Internet via the cellular data channel, etc.). For example, according to the regulations in Germany, the maximal time period T between two operator-initiated phone registrations (of each individual telephone device), is 4 hours. This maximal period T is not the same in all countries. For example, in Poland said maximal period T is 3 hours. The phone device registration in fact records the antenna number to which the telephone is presently connected, or alternatively a cell number. Therefore, each telephone registration in fact allows the telephone company to determine, at least to some accuracy extent, the geographic location of the respective telephone device. Even though such geographic location of the device in fact enables the telephone company to also determine the respective individual user of the device (by correlating the device ID with a CRM database as existing at the company), such a location determination of an individual by the company is strictly prohibited by regulations. Moreover, the phone company is prohibited from making any statistical use of said location information, as in order to perform this statistical task, the phone company should handle the respective data in a resolution of an individual user. More specifically, if the number of users in a specific classification (classification relates, for example, to users above the age of 50, users earning above the average salary, women, youngsters, etc.), that at some specific period are located at a specific location (i.e., connected to a same specific antenna) occurs to be, for example, a single user, such a situation in fact exposes to the operator (i.e., company) to the exact location of the respective individual user, a situation which is against the strict regulations that are intended to protect the privacy of individual users. As a result, the telephone company in fact cannot make any use of such location capability.

The system and method of the present invention overcome this situation which prohibits a phone company from making use of users location data, just because it may handle in some situations a "group" of people belonging to same classification, that "are" located at some time within a same location, but this "group" may occur to be at some time a single user.

The present invention provides a system and method which eliminates any possibility of exposing a location of a single user. The present invention assures that before any data set is at all inspected or analyzed, a precondition assurance is made that the data set of registrations which is treated relates to at least some minimal number N of different phone devices. If said precondition is not met, neither analysis nor use of the respective records can be made.

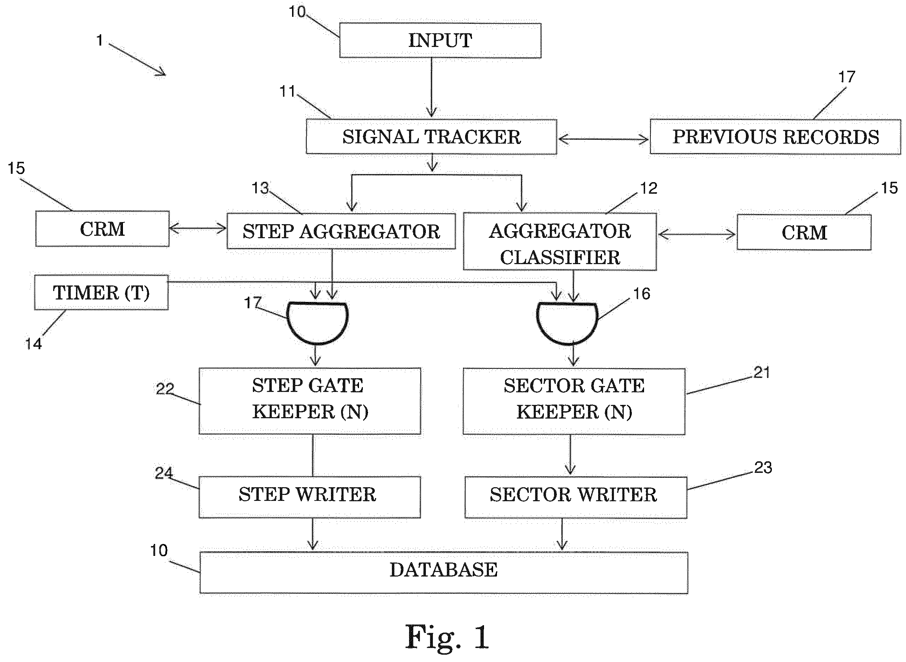

Fig. 1 describes a structure of a location and classification system 1 with privacy constraints according to an embodiment of the present invention.

A mass amount of mobile phones registration records, as received respectively from plurality of antennas (generally many antennas, typically in the order of hundreds, thousands, or even more) is received at input 10. As noted above, a phone registration record may evolve, for example, from a periodical inquiry as initiated by the cellular network against each individual mobile phone. The inquiries may be performed, for example, once every several tens of minutes or once every several hours, depending local regulations. A device registration may alternatively evolve from an action with the phone by the phone user (such as conducting of a phone call, using the device data channel, etc.). Each of such registration record comprises at least the antenna (or cell) ID, the *x*,*y* location of the user (within the antenna coverage), and the respective time of registration. All said mass flow of registrations records is initially analyzed by signal tracker 11 such that the records with respect to registrations within each sector (a "sector" relates to a specific geographic location) are maneuvered to aggregator-classifier 12. Signal tracker 11 further analyzes the input records to determine movement of a device from an area which is covered by a specific antenna (or cell) to an area covered by another antenna (or cell - hereinafter, for the sake of brevity the following description will refer to antennas only to cover both antennas records and cell records). For this purpose the signal tracker 11 consults and compares the present record with a corresponding previous record 17 for each individual device. Any time when a transfer of a device from a specific antenna to another antenna is determined, this transfer is reported to the step aggregator 13.

Aggregator-classifier 12 classifies and aggregates the various received records. The received records are aggregated based on their location, and they are also aggregated based on the individual respective user classification, as determined by consultation of the aggregator-classifier 12 with the users CRM 15, as existing at the telephone company. Such classification may divide the device users, for example, by age range, gender, salary levels, etc.

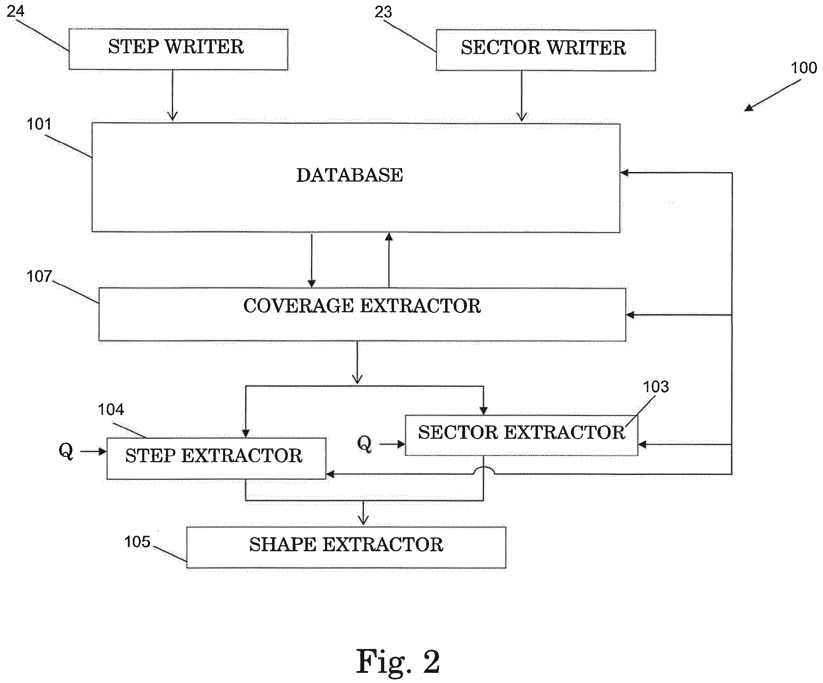

Timer 14 defines the duration T during which the aggregation is performed. The duration T may depend on specific local regulations, and may be, for example, 4 hours. Each time when the period T elapses, timer 14 opens gates 16 and 17, and the data as aggregated within aggregator-classifier 12 and step aggregator 13, respectively, is conditionally conveyed via gate-keepers 21 and 22 respectively to the sector writer 23 and to a step writer 24. More specifically, for each aggregation set which is received from the aggregator-classifier 12 and from the step aggregator 13, each of the two gate keepers 21 and 22 verifies and assures that the respective aggregation results from a number of different devices larger than N. All those aggregations resulting from less than N different devices are blocked by the gate keepers 23 and 24 respectively from entering the respective sector writer and step writer 23 and 24. In such manner, the gate keepers 21 and 22 ensure the privacy of the device users by always conveying large enough aggregation sets (i.e., each set relating to of more than N devices), while preventing forwarding of too small aggregation sets (that relate to less than N devices). Resulting from this scheme, all the aggregations within the sector writer and step writer 23 and 24 respectively cannot be used for determination or monitoring of a location of a single user and as a result, the user's privacy is maintained. Sector writer 23 and step writer 24 in turn write said aggregations within a database 101 (shown in Fig. 2). The number N may be defined, for example, based on local privacy regulations. Clearly, a larger N ensures higher level of privacy than a smaller N.

In one option of the invention, when a transfer of an aggregation set is blocked by a step gate keeper 23 or by sector gate keeper 24 respectively, the data which relates to the respective sector (classification) is merged with one of the proximate aggregations to form a merged set larger than N which can be used instead without breaching the privacy regulations. For example, assuming that N=5, and an aggregation relating to a specific location and classification (for example, location L and users of 50-60 years of age) is found to include records from only two devices, this set may be merged with a proximate set of 40-50 years of age, to form a merged set of larger size which includes aggregation of users of 40-60 years of age. The larger set has a larger probability to meet the regulation requirements. In another option, the too small set of aggregation (which relates to less than N devices) is discarded.

Following each of said transfer of aggregations at the end of period T (period T may be, for example, 90 minutes), all the aggregations within the aggregator-classifier 12 and step aggregator 13 are cleared, and the aggregation process resumes from empty sets of aggregations.

Each specific aggregator summarizes those devices that have been recorded within the coverage area of a specific antenna (i.e., location Lᵢ), during the specific period Tₙ. However, typically not all of the devices that have been recorded during the period T remain within this location at the end of the period. The step aggregators that indicate those devices that left the location Li enable deduction of said devices from the relevant aggregator, and determination of those relevant devices aggregated at the end of the period.

Reference is now made to Fig. 2. As noted above, the sector writer 23 and step writer 24 write the respective "privacy approved" aggregations (i.e., those aggregations that have passed the gate keepers conditions) into database 101. Fig. 2 illustrates a structure of analyzer 100, according to an embodiment of the invention. More specifically Fig. 2 illustrates how queries are submitted into the database 101, how these queries are analyzed, and how answers to the queries are provided. A query *Q* is submitted to both the sector extractor 103 and step extractor 104. The query *Q* indicates a scope of the query, such as time duration *D* for which the response is requested, a classification (i.e., specific aggregation), and a geographical location (or area). The query is submitted to the database 101, and to the coverage extractor (which in turn converts the requested geographical location into antenna/s IDs). The answers to the query are received at step extractor 104 and sector extractor 103 respectively, that in turn forward the two separate answers to the shape extractor 105, which in turn constructs the final answer.

As shown, the present invention provides a system which substantially isolates the queries from any data that may infringe users' privacy. Any data which is stored within database 101, and which is accessible by queries Q is already filtered not to include such records that are in a resolution higher than predefined thresholds N and T (higher resolution means a request for information with respect to fewer users than N and/or request for information during a time period which is shorter than T). More specifically, such records that may enable querying in a higher resolution than N and or T are not at all stored within database 101, and therefore queries to obtain such higher resolution answers cannot be met. Therefore, while the system of the invention provides answers to queries with respect to location of mobile phone users during specific time periods, such answers are well protected from infringing users' privacy.

While some embodiments of the invention have been described by way of illustration, it will be apparent that the invention can be carried out with many modifications variations and adaptations, and with the use of numerous equivalents or alternative solutions that are within the scope of persons skilled in the art, without exceeding the scope of the claims.

## Claims

1. A system (1) for providing a database (10) ready for querying and analyzing locations of mobile phone users that are included in network registration records, said database being secured from possibility of breaching a privacy of a single user, which comprises:
a. a signal tracker (11) configured to receive a flow of real-time network registration records of a plurality of mobile phones, and to compare each registration record with a corresponding previous registration record for a same mobile phone, and to forward any present registration record and the result of said comparison to an aggregator-classifier (12) and a step aggregator (13) respectively;
b. an aggregator-classifier (12) and a step aggregator (13) configured to receive each of said registration records and comparison results respectively, to consult with a CRM database (15) with respect to each registration record, thereby to determine user classifications, and based on said determined user classifications, to aggregate the registration records and the step records;
c. a timer (14) which is configured to periodically, every period T, forward the aggregated registration records and the aggregated step records, as aggregated within said aggregator-classifier and within said step aggregator respectively to a sector gate keeper (21) and to a step gate keeper (22) respectively;
d. a sector gate keeper (21) and a step gate keeper (22) that are configured to inspect each aggregation of registration records and each aggregation of step records, and to forward to a sector writer (23) and to a step writer (24) respectively only those aggregation sets of registration records and aggregation sets of step records that result from at least a predefined number N of different users, wherein N is a minimal number which meets local privacy regulations;
e. a sector writer (23) and a step writer (24) that are configured to receive aggregations of registration records, and aggregations of step records, each resulting from at least said predefined number N of different users, and to write all said records within a database (10).

2. System according to claim 1, wherein all those aggregated step and registration records that are found by said gate keepers to result from less than N different users, are merged with records of proximate classifications, respectively, within the aggregator-classifier and within the step aggregator respectively to form enlarged respective records that each results from more than N users, all those enlarged-range records that are found by said gate keepers to result from more than N users are also forwarded as such to the sector writer and to the step writer respectively.

3. System according to claim 1, which further comprises an analyzer, for querying and performing statistical analysis within said database.

4. System according to claim 3, wherein said analyzer comprises:
a. a sector extractor and a step extractor for receiving and conveying a query to the database;
b. a coverage extractor for receiving a result of said query, and for limiting a coverage range of the result to a specific geographical range; and
c. a shape extractor for forming a final result of the query.

## Patentansprüche

1. System (1) zum Bereitstellen einer Datenbank (10), die bereit ist zum Abfragen und zum Analysieren von Mobiltelefonnutzerstandorten, die in Netzwerkregistrierungsdatensätzen enthalten sind, wobei die Datenbank vor dem Risiko einer Verletzung einer Privatsphäre eines einzelnen Benutzers gesichert ist, welches Folgendes umfasst:
a. einen Signaltracker (11), konfiguriert zum Empfangen eines Stroms von Echtzeit-Netzwerkregistrierungsdatensätzen von mehreren Mobiltelefonen und zum Vergleichen von jedem Registrierungsdatensatz mit einem entsprechenden vorherigen Registrierungsdatensatz für ein identisches Mobiltelefon und zum Weiterleiten eines beliebigen vorliegenden Registrierungsdatensatzes sowie des Ergebnisses des Vergleichs an einen Aggregator-Klassifizierer (12) beziehungsweise einen Schrittaggregator (13);
b. einen Aggregator-Klassifizierer (12) und einen Schrittaggregator (13), konfiguriert zum Empfangen jedes der Registrierungsdatensätze beziehungsweise der Vergleichsergebnisse, um mit Bezug auf jeden Registrierungsdatensatz in einer CRM-Datenbank (15) nachzuschlagen, um somit Benutzerklassifizierungen zu bestimmen, sowie um auf der Grundlage der bestimmten Benutzerklassifizierungen die Registrierungsdatensätze und die Schrittdatensätze zu aggregieren;
c. einen Timer (14), der konfiguriert ist, periodisch nach jeder Periode T die aggregierten Registrierungsdatensätze und die aggregierten Schrittdatensätze, wie in dem Aggregator-Klassifizierer beziehungsweise in dem Schrittaggregator aggregiert, an einen Sektor-Gatekeeper (21) beziehungsweise an einen Schritt-Gatekeeper (22) weiterzuleiten;
d. einen Sektor-Gatekeeper (21) und einen Schritt-Gatekeeper (22), die konfiguriert sind zum Inspizieren jeder Aggregation von Registrierungsdatensätzen und jeder Aggregation von Schrittdatensätzen sowie zum Weiterleiten an einen Sektorschreiber (23) beziehungsweise an einen Schrittschreiber (24) nur derjenigen Aggregationssätze aus Registrierungsdatensätzen und derjenigen Aggregationssätze aus Schrittdatensätzen, die aus wenigstens einer vorgegebenen Anzahl N verschiedener Benutzer hervorgehen, wobei N eine Mindestzahl ist, die lokalen Privatsphärenvorschriften entspricht;
e. einen Sektorschreiber (23) und einen Schrittschreiber (24), die konfiguriert sind, Aggregationen von Registrierungsdatensätzen und Aggregationen von Schrittdatensätzen zu empfangen, die alle wenigstens aus der vorgegebenen Anzahl N verschiedener Benutzer hervorgehen, und alle diese Datensätze in eine Datenbank (10) zu schrieben.

2. System nach Anspruch 1, wobei alle diese aggregierten Schritt- und Registrierungsdatensätze, für die die Gatekeeper ermittelt haben, dass sie aus weniger als N verschiedenen Benutzern hervorgehen, mit Datensätzen entsprechender angenäherter Klassifizierungen in dem Aggregator-Klassifizierer beziehungsweise in dem Schrittaggregator zusammengeführt werden, um entsprechende vergrößerte Datensätze auszubilden, die jeweils aus den mehr als N Benutzern hervorgehen, wobei alle diese Datensätze mit vergrößertem Umfang, für die die Gatekeeper ermittelt haben, dass sie aus mehr als N Benutzern hervorgehen, auch derart an den Sektorschreiber beziehungsweise den Schrittschreiber weitergeleitet werden.

3. System nach Anspruch 1, ferner umfassend einen Analysator zum Abfragen und Ausführen statistischer Analyse in der Datenbank.

4. System nach Anspruch 3, wobei der Analysator Folgendes umfasst:
a. einen Sektorextraktor und einen Schrittextraktor zum Empfangen und zum Weiterleiten einer Anfrage an die Datenbank;
b. einen Abdeckungsextraktor zum Empfangen eines Ergebnisses der Abfrage und zum Begrenzen eines Abdeckungsbereichs des Ergebnisses auf einen bestimmten geographischen Bereich; und
c. einen Formextraktor zum Ausbilden eines Endergebnisses der Anfrage.

## Revendications

1. Système (1) destiné à fournir une base de données (10) prête pour interroger et analyser des emplacements d'utilisateurs de téléphones mobiles qui sont inclus dans des enregistrements d'inscription à un réseau, ladite base de données étant protégée de la possibilité de violation de la vie privée d'un utilisateur individuel, lequel système comporte :
a. un traqueur de signal (11) configuré pour recevoir un flux d'enregistrements d'inscription au réseau en temps réel d'une pluralité de téléphones mobiles, et pour comparer chaque enregistrement d'inscription à un enregistrement d'inscription précédent correspondant pour un même téléphone mobile, et pour transférer tout enregistrement d'inscription actuel et le résultat de ladite comparaison à un agrégateur-classificateur (12) et un agrégateur progressif (13) respectivement,
b. un agrégateur-classificateur (12) et un agrégateur progressif (13) configurés pour recevoir respectivement chacun desdits enregistrements d'inscription et des résultats de comparaison, pour consulter une base de données CRM (15) concernant chaque enregistrement d'inscription, pour ainsi déterminer des classifications d'utilisateurs, et sur la base desdites classifications d'utilisateurs déterminées, pour agréger les enregistrements d'inscription et les enregistrements progressifs,
c. une horloge (14) qui est configurée pour transférer périodiquement, à chaque période T, les enregistrements d'inscription agrégés et les enregistrements progressifs agrégés, tels qu'ils sont agrégés dans ledit agrégateur-classificateur et dans ledit agrégateur progressif respectivement, vers un garde-barrière de secteur (21) et un garde-barrière progressif (22) respectivement,
d. un garde-barrière de secteur (21) et un garde-barrière progressif (22) qui sont configurés pour inspecter chaque agrégation d'enregistrements d'inscription et chaque agrégation d'enregistrements progressifs, et pour transférer vers un rédacteur de secteur (23) et un rédacteur progressif (24) respectivement uniquement les ensembles d'agrégation d'enregistrements d'inscription et les ensembles d'agrégation d'enregistrements progressifs qui résultent d'au moins un nombre prédéfini N de différents utilisateurs, dans lequel N est un nombre minimal qui correspond aux réglementations locales sur la vie privée,
e. un rédacteur de secteur (23) et un rédacteur progressif (24) qui sont configurés pour recevoir des agrégations d'enregistrements d'inscription et des agrégations d'enregistrements progressifs, chacune résultant au moins dudit nombre prédéfini de N utilisateurs différents, et pour écrire tous lesdits enregistrements dans une base de données (10).

2. Système selon la revendication 1, dans lequel tous les enregistrements progressifs et d'inscription agrégés qui sont trouvés par lesdits garde-barrières pour résulter de moins de N utilisateurs différents, sont fusionnés avec des enregistrements de classifications de proximité, respectivement, dans l'agrégateur-classificateur et dans l'agrégateur progressif respectivement pour former des enregistrements respectifs élargis qui résultent chacun de plus de N utilisateurs, tous les enregistrements à plage étendue qui sont trouvés par lesdits garde-barrières pour résulter de plus de N utilisateurs sont également transférés en tant que tel vers le rédacteur de secteur et le rédacteur progressif respectivement.

3. Système selon la revendication 1, lequel système comporte en outre un analyseur, pour interroger et effectuer une analyse statistique dans ladite base de données.

4. Système selon la revendication 3, dans lequel ledit analyseur comporte :
a. un extracteur de secteur et un extracteur progressif pour recevoir et transférer une requête vers la base de données,
b. un extracteur de couverture pour recevoir un résultat de ladite requête, et pour limiter une plage de couverture du résultat à une étendue géographique spécifique, et
c. un extracteur de forme pour former un résultat final de la requête.
